# EUROPEAN PATENT APPLICATION

(11) **EP 1 291 782 A1**
(43) Date of publication of application: **12.03.2003**
(21) Application number: 00935560.3
(22) Date of filing: 06.06.2000
(51) Int. Cl.: G06F 15/00, G09C 1/00, G06F 12/00

(54) **INFORMATION MANAGEMENT SYSTEM**

(71) Applicant: Yozan Inc., Tokyo 155-0031 (JP)
(72) Inventor: TAKATORI, Sunao, c/o Yozan Inc., Tokyo 155-0031 (JP); KIYOMATSU, Hisanori, c/o Yozan Inc., Tokyo 155-0031 (JP)
(74) Representative: Wynne-Jones, John Vaughan
(86) International application number: JP0003674
(87) International publication number: WO01095122

(57) **Abstract**

The present invention prevents information transferred within a LAN from being transferred to a terminal having no browse authority, and allows detection in cases of unauthorized transfers and the like. The present invention comprises n terminals (2A) - (2n) interconnected through the LAN, and a host computer (1). In transferring information from a host terminal to a guest terminal or guest terminals with any of the terminals as the host terminal and with one or more of the other terminals as the guest terminal(s), the host terminal sends to the host computer (1) information request data for specifying and requesting the information to transfer, along with identification information on the guest terminal(s) to be the destination(s) of the information and information regarding a send sequence. The host computer (1) applies encryption to the host-terminal-required information and sends encrypted data to the host terminal, and, on receiving browse request data from terminals on the LAN, performs authentication bases on the identification information and sends decryption data to authentic terminals.

## Description

### Technical Field

The present invention relates to an information management system, and more particularly to a system for exercising management against unauthorized transfers and the like in the cases where information from a host computer is transferred between terminals.

### Background Art

In recent years, in the field of information communication systems, the developments of local area networks (LAN), e-mail services, and the like have made it possible to send/receive various data including characters, images, and sounds between terminals with ease. Besides, the developments of the Internet, commercial communication networks, and the like have paved the way to easy acquisition of the above-described various data by using a variety of terminals. Moreover, the above-mentioned LANs, e-mail services, and the like have found widespread use in sharing and transferring the above-described various data between particular terminals or between particular users, distributing various data by broadcasting, and so on. Furthermore, the developments of terminals and communication systems have allowed the transmission/reception of various data through radio signals by using cellular phones and the like aside from the data transfer and the like through wire signals.

While the information communication systems have made such rapid developments, there has been a problem that pieces of information for the systems to retain or send/receive are subjected to unauthorized accesses by third parties, unauthorized transfers to third parties, information tampering, and the like, and studies have been made on protective measures against this. In particular, information of high confidentiality, including financial information, individual privacy information, and information regarding company's industrial secrets, requires the construction of a system that can block unauthorized third-party leakage and unauthorized third-party accesses to ensure information confidentiality.

### Disclosure of the Invention

An object of the present invention is to provide an information management system which prevents information transferred within a local area network from being transferred to a terminal having no browse authority, and allows detection in cases of unauthorized transfers and the like.

A first configuration of the information management system according to the present invention comprises n terminals (n is an integer equal to or greater than 2), a local area network for connecting the n terminals to one another, and a host computer for sending/receiving data to/from the individual terminals on the local area network, wherein: when information sent from the host computer is transferred from a host terminal to a guest terminal or guest terminals with any of the n terminals on the local area network as the host terminal and with one or more of the other terminals as the guest terminal(s), the host terminal sends to the host computer information request data for specifying and requesting the information to transfer to the guest terminal (s) , along with identification information on the guest terminal(s) to be the destination(s) of the information and information regarding a send sequence; and the host computer applies encryption to information corresponding to the information request data sent from the host terminal and sends encrypted data to the host terminal on the local area network, and, on receiving browse request data for requesting browsing of the information from any of the terminals on the local area network, performs authentication based on the identification information and sends decryption data for decrypting the encrypted data to the terminal only if authenticated properly.

A second configuration of the information management system according to the present invention is the first configuration wherein the host terminal sends to the host computer the information request data along with a master table describing the identification information on the guest terminal(s) to be the destination (s) of the information and the information regarding the send sequence, and, on receiving the encrypted data from the host computer, transfers the encrypted data to the guest terminal(s) in the send sequence described in the master table.

A third configuration of the information management system according to the present invention is the second configuration wherein each terminal on the local area network having received the encrypted data and the master table from the host terminal records the date and time of reception of the encrypted data and the master table into the master table, and sends the recorded master table to the host computer in advance of requesting the decryption data from the host computer.

A fourth configuration of the information management system according to the present invention is the second or third configuration wherein the host computer, on receiving the browse request data from each terminal on the local area network, records the date and time of reception of the browse request data into the master table.

A fifth configuration of the information management system according to the present invention is the third configuration wherein the host computer temporarily retains the master table sent from the host terminal, and, when the recorded master table from each terminal is sent thereto, collates the retained master table with the recorded master table for appropriate update and retention.

A sixth configuration of the information management system according to the present invention is the second configuration wherein the host terminal records into the master table information indicating whether or not each guest terminal to be the destination of the information has redistribution authority to make a further transfer of that information to another terminal, and sends the master table to the host computer .

A seventh configuration of the information management system according to the present invention is the sixth configuration wherein: a guest terminal having the redistribution authority sends a redistribution master table to the host computer on receiving the encrypted data and the master table from the host terminal, the redistribution master table describing identification information on a sub-guest terminal or sub-guest terminals to be the destination (s) of the encrypted data and information regarding a send sequence; and the host computer, on receiving the browse request data from a sub-guest terminal described in the redistribution master table, performs authentication based on the identification information described in the redistribution master table and sends the decryption data to the sub-guest terminal only if authenticated properly.

An eighth configuration of the information management system according to the present invention is the seventh configuration wherein the host computer, on receiving the browse request data from each terminal on the local area network, records the date and time of reception of the browse request data into the redistribution master table.

A ninth configuration of the information management system according to the present invention is the seventh or eighth configuration wherein the host computer temporarily retains the redistribution master table, and, when the recorded redistribution master table from each terminal is sent thereto, collates the retained redistribution master table with the recorded redistribution master table for appropriate update and retention.

### Brief Description of the Drawings

Fig. 1 is a diagram explaining the general configuration of an information management system to which the present invention is applied.
Fig. 2 is a diagram showing a configuration example of the host computer in the information management system.
Fig. 3 is a diagram explaining the configuration of each terminal on the LAN.
Fig. 4 is a diagram showing the configuration of a master table.
Fig. 5 is a flowchart explaining the processing for the host computer to perform.

### Description of the Reference Numerals

- 1: host computer
- 11: control unit
- 12: external storage unit
- 13: transmission/reception unit
- 14: display unit
- 15: operation input unit
- 2 (2A, 2B, 2C, 2D, ... 2n): terminal
- 21: control unit
- 22: external storage unit
- 23: transmission/reception unit
- 24: display unit
- 25: operation input unit

### Best Mode for Carrying out the Invention

An embodiment of the present invention will be described in detail with reference to the drawings.

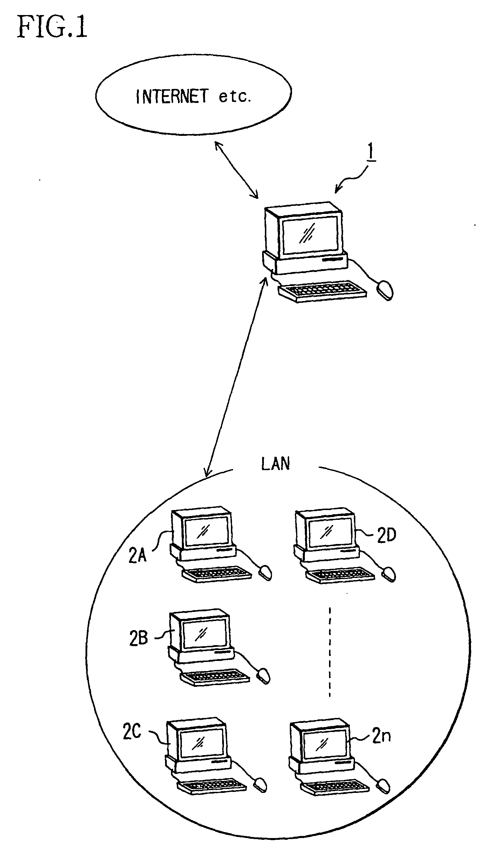

Fig. 1 is a diagram explaining the general configuration of an information management system to which the present invention is applied. In the information management system of the embodiment, as shown in Fig. 1, a host computer 1 to be operated by an operator and n terminals 2 (2A, 2B, 2C, 2D, ... 2n) interconnected within a local area network (LAN) are connected to one another for mutual data transmission/reception.

The host computer 1 is connected, for example, with the Internet, various commercial communication networks and the like, so that data obtained through the Internet and the like and data received from a terminal 2 on the LAN can be sent to a certain terminal 2 on the LAN. Specifically, for example, different IDs are assigned to the individual terminals 2A-2n on the LAN so that the host computer 1 sends data to a certain destination ID. It is also possible for the individual terminals 2A-2n on the LAN to send/receive data there between by specifying a certain ID.

### (Host Computer Configuration)

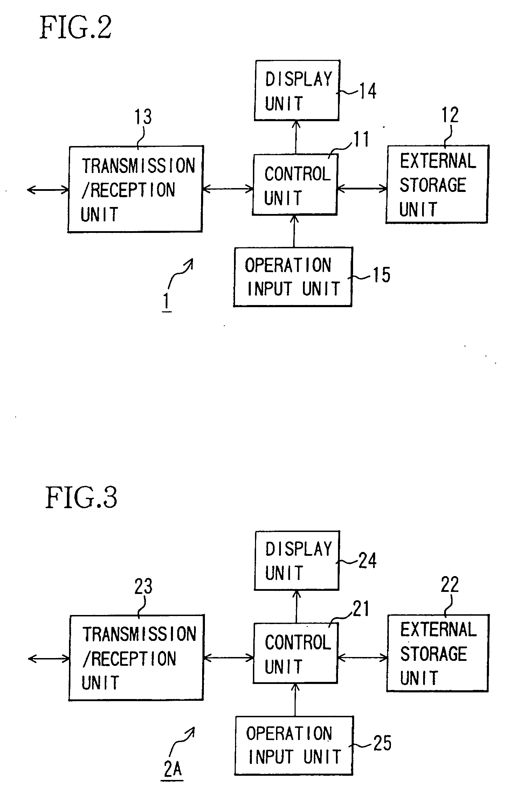

Fig. 2 is a diagram explaining the configuration of the host computer 1. As shown in Fig. 2, the host computer 1 comprises: a control unit 11 for controlling the entire host computer; an external storage unit 12 consisting of a hard disk drive and the like; a transmission/reception unit 13 consisting of a modem and the like; a display unit 14 consisting of a CRT, a liquid crystal display, and the like; and an operation input unit 15 including a keyboard, a mouse, and the like.

The control unit 11 of the host computer 1 exercises control over the units in accordance with processing programs stored in the external storage unit 12. The processing programs include, for example, an authentication program for authenticating each terminal on the LAN, an encryption program for encrypting data sent from any of the terminals 2 on the LAN, a master table management program for checking a master table to be described later, and a decryption key issuing program for issuing data which constitutes the key for decoding data encrypted by the encryption program. Each of these programs is read by the control unit 11 according to need, processed and executed, and, if required, transmitted to any of the terminals 2 on the LAN.

The transmission/reception unit 13 receives data and/or commands (hereinafter, referred to as data and the like) sent from the individual terminals 2 on the LAN. Here, the data and the like sent from the terminal 2 include a command for specifying information for the terminal 2 to obtain and thereby requesting the transmission of that information (hereinafter, referred to as information request data), data regarding the master table, a command for requesting browsing, and various other commands to the host computer 1.

The control unit 11 of the host computer 1, when these various types of data sent from the terminal units 2 are received by the transmission/reception unit 13, exercises control to store the data into the external storage unit 12 or a not-shown memory in the control unit 11 temporarily and, based on the received data, read a necessary program or programs from the external storage unit 12 for execution.

Besides, when data sent through the Internet, various commercial communication networks, and the like, or from a terminal 2 on the LAN is received by the transmission/reception unit 13, the control unit 11 of the host computer 1 stores the same into the external storage unit 12. Here, in the cases where data regarding the master table to be described later is sent from a terminal 2 on the LAN with information request data for requesting data stored in the external storage unit 12, the control unit 11 of the host computer 1 reads the above-mentioned authentication program, encryption program, master table management program, and the like from the external storage unit 12 and activates the same, so that encryption is applied to predetermined data stored in the external storage unit 12 and the transmission/reception unit 13 sends the encrypted data and the master table to the terminal 2 on the LAN. Incidentally, the details of the remaining processing will be described later.

### (Terminal Configuration)

Fig. 3 is a diagram explaining the configuration of each terminal on the LAN. Here, description will be given only of the terminal 2A in Fig. 1. The other terminals 2B, etc., have the same configuration, and hence description thereof will be omitted.

As shown in Fig. 3, the terminal 2A on the LAN comprises: a control unit 21 for controlling the entire terminal; an external storage unit 22 consisting of a hard disk drive and the like; a transmission/reception unit 23 consisting of a modem and the like; a display unit 24 consisting of a CRT, a liquid crystal display, and the like; and an operation input unit 25 including a keyboard, amouse, and the like. Incidentally, in the following description, the control unit 21 of the terminal 2A will be referred to as CPU 21 for the sake of clear distinction to the control unit of the host computer 1.

The CPU 21 of the terminal 2A exercises control over the units in accordance with processing programs stored in the external storage unit 22. The processing programs include, for example, a data acquisition program for displaying the types, lists, and the like of data the host computer 1 possesses onto the display unit 24 so that selections about the data to acquire are made via the operation input unit 25, a master table sending program for inputting data to each field in the master table to be described later and sending the same, and a data decoding program for decoding encrypted data sent from the host computer 1 in accordance with a decryption key sent afterwards from the host computer 1. These programs are read by the CPU 21 according to need, processed and executed. Then, data and the like processed and executed are sent from the transmission/reception unit 23 to the host computer 1 or another terminal 2 on the LAN as appropriate.

The transmission/reception unit 23 of the terminal 2A performs data transmission/reception to/from the host computer 1. The transmission/reception unit 23 of the terminal 2A also performs data transmission/reception to/from other terminal units 2 on the LAN. When data sent from the host computer 1 or another terminal unit 2 on the LAN is received by the transmission/reception unit 23, the CPU 21 of the terminal 2A stores the received data into a not-shown memory in the CPU 21 or the external storage unit 22.

In the terminal 2A, when the above-mentioned programs are executed, data input screens, which are used in sending various data to the host computer 1, are displayed on the display unit 24. The display unit 24 also presents image displays as to various data sent from the host computer 1. Here, the data input screens include, for example, an initial input screen for establishing connection with the host computer 1, a master table input screen for inputting data to the master table to be described later, and an operation select screen for making selections as to operations for the operator to perform.

The operation input unit 25 is intended for operations needed for the executions of the above-described programs, input operations concerning various data to be sent to the host computer 1, and the like.

### (Master Table Configuration)

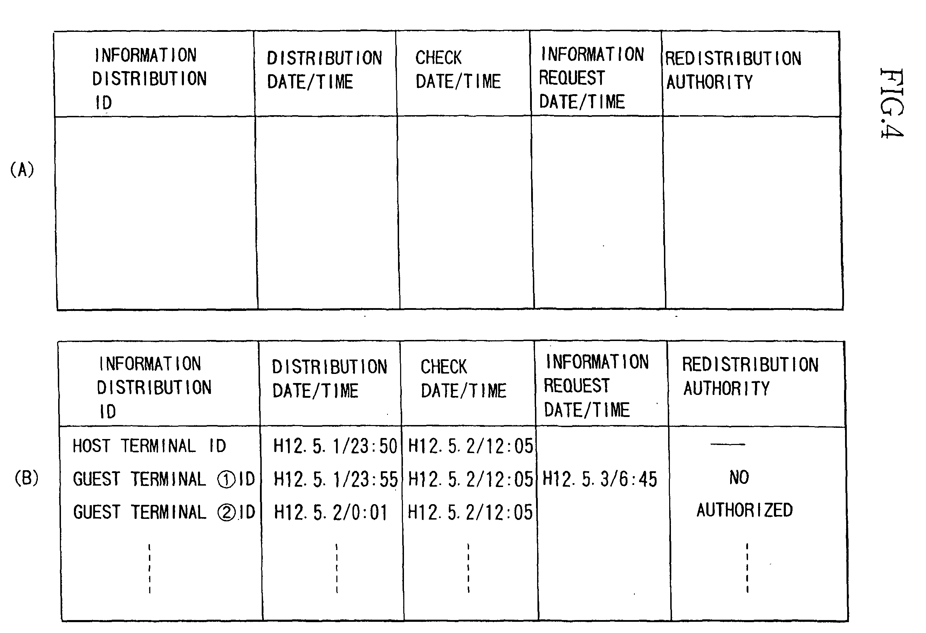

Fig. 4 shows the configuration of a master table. Here, Fig. 4 (A) shows an initial state where each field is blank. Fig. 4(B) shows the case where data is recorded in the respective fields.

In this embodiment, the fields constituting a master table consist of, as shown in Fig. 4, "INFORMATION DISTRIBUTION ID" field, "DISTRIBUTION DATE/TIME" field, "CHECK DATE/TIME" field, "INFORMATION REQUEST DATE/TIME" field, and "REDISTRIBUTION AUTHORITY" field.

Here, "INFORMATION DISTRIBUTION ID" field is a field to be recorded by any one of the terminals 2 on the LAN which sends the information request data to the host computer 1. Recorded in this field are IDs of those terminals on the LAN to be the destinations of encrypted data transmitted from the host computer 1. Specifically, when any terminal 2 among the terminals 2A-2n on the LAN sends the information request data to the host computer 1, this particular terminal 2 becomes a host terminal so that the ID of this host terminal is recorded in the top row of the information distribution ID field. Then, when encrypted data from the host computer 1 is transferred from the host terminal to other terminals 2A-2n on the LAN, these particular other terminals become guest terminals so that they are successively recorded into the information distribution ID field, below the ID of the host terminal in the order of transfer. For example, in the case where the terminal 2A on the LAN shown in Fig. 1 becomes the host terminal to transfer the encrypted data from the host computer 1 in the order of the terminal 2A → the terminal 2B → the terminal 2C → the terminal 2D, the IDs of these four terminals are successively recorded in the information distribution ID field from the top.

"DISTRIBUTION DATE/TIME" field in the master table is a field for the individual terminals recorded in the information distribution ID field to record independently. Recorded in this field are the dates and times at which the individual terminals recorded in the information distribution ID field have received the encrypted data from the host computer 1 with their transmission/reception units 23. For example, in the case where the terminal 2A on the LAN shown in Fig. 1 becomes the host terminal to transfer encrypted data from the host computer 1 in the order of the terminal 2A → the terminal 2B → the terminal 2C → the terminal 2D, and if the terminal 2A (host terminal) transmits the encrypted data from the host computer to the terminal 2B (guest terminal) at 23:50 on May 1, in Heisei 12, then the terminal 2A records, e.g., "H12.5.1/23:50" in "DISTRIBUTION DATE/TIME" field as shown in Fig. 4 (B). Subsequently, when the terminal 2B (guest terminal) transmits the encrypted data to the terminal 2C (guest terminal) at 23:55 on the same date in the same year, the terminal 2B records, e.g., "H12.5.1/23:55" in "DISTRIBUTION DATE/TIME" field as shown in Fig. 4(B).

Ditto for the following, whereas the guest terminal listed at the bottom of the master table (for instance, the terminal 2D in the above-described example) records the date and time in "DISTRIBUTION DATE/TIME" field and transfers this master table to the host computer 1. Hereinafter, this guest terminal to be the final destination listed at the bottom in the master table will be referred to as "final information distribution terminal."

Parenthetically, while in this embodiment the encrypted data is not transferred from the final information distribution terminal to the host computer 1, the encrypted data may be transferred from the final information destination terminal to the host computer 1 for the purpose of, e.g., checking for information tampering and the like involved in the information transfer between the individual guest terminals.

"CHECK DATE/TIME" field in the master table is a field for the host computer 1 to record. Recorded in this field are the dates and times at which the host computer 1 has checked the distribution dates and times.

"INFORMATION REQUEST DATE/TIME" field in the master table is a field for the host computer 1 to record. Recorded in this field are the dates and times at which the host computer 1 has sent a decryption key to the host terminal or a guest terminal.

Recorded in "REDISTRIBUTION AUTHORITY" field are whether or not those particular guest terminals have the redistribution authority. Here, the redistribution authority refers to the authority of a guest terminal to specify one or more sub-guest terminals anew to transfer the encrypted data from the host computer 1 to the particular sub-guest terminal(s).

When a guest terminal carries out redistribution, the guest terminal is to create a new master table designating its sub-guest terminal(s) (hereinafter, referred to as the redistribution master table) and send the redistribution master table to the host computer 1 in advance of the redistribution. The redistribution master table has the same configuration as that of the master table in Fig. 4. Here, the ID of the guest terminal having the redistribution authority is recorded at the top in "INFORMATION DISTRIBUTION ID" field.

In this connection, for the sake of preventing unlimited information distributions, "REDISTRIBUTION AUTHORITY" field is preferably eliminated from the redistribution master tables so as not to permit further designation of sub-guest terminals.

### (Processing and the like for the Host Computer to Perform)

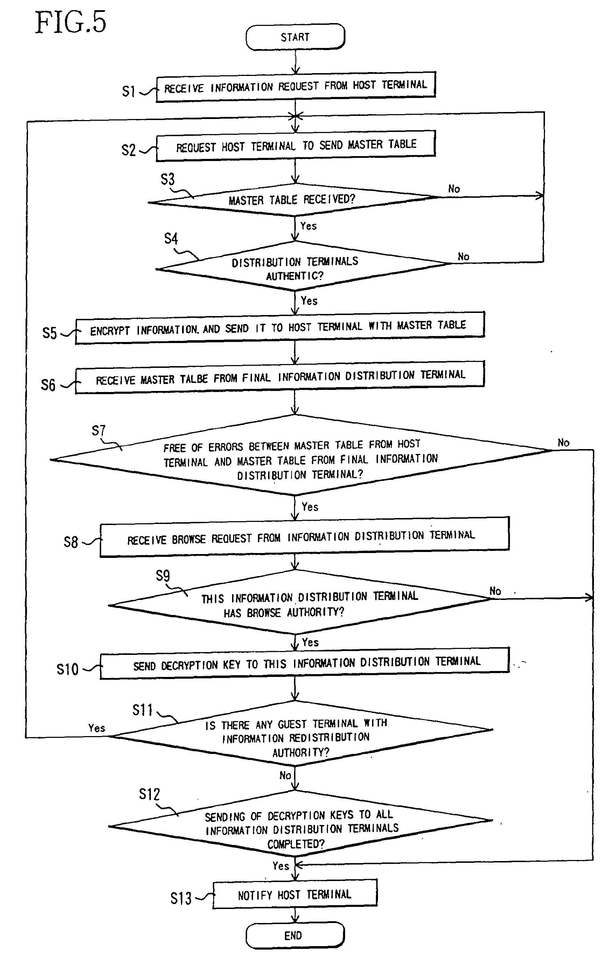

Hereinafter, controls for the control unit 11 of the host computer 1 to exercise will be described with reference to a flowchart in Fig. 5.

At step S1, the control unit 11 of the host computer 1 receives an information request from the host terminal with its transmission/reception unit 13. At step S2, the control unit 11 controls the transmission/reception unit 13 to send data requesting the host terminal to send data regarding the master table. Thereby, a display like "Send master table" appears on the display unit 24 of the host terminal.

At next step S3, the control unit 11 of the host computer 1 enters a wait for the data regarding the master table to be sent from the host terminal, and, on receiving the data regarding the master table (hereinafter, simply referred to as master table) from the host terminal with the transmission/reception unit 13, retains the master table in a memory and the like and proceeds to step S4. While not receiving, the control unit 11 of the host computer 1 returns to step S2 and controls the transmission/reception unit 13 to resend the data requesting the host terminal to send the data regarding the master table.

At step S4, the host computer 1 determines whether or not the individual distribution terminals recorded in the sent master table are authentic, and if authentic, proceeds to step S5. Whether a terminal is authentic or not is determined, for example, based on its telephone number, whether or not it has an ID number the host computer 1 can recognize, and the like. Here, if the terminal is unauthentic, the host computer 1 returns to step S2 and controls the transmission/reception unit 13 to send the data requesting the host terminal to send the data regarding the master table. At this time, a display like "Master table contains terminals unauthentic to host computer. Send master table with information distribution field listing host-computer-authentic terminals only" is made on the display unit 14 of the host terminal.

At step S5, the host computer 1 applies encryption processing to the information requested by the host terminal, sends the encrypted information and the data regarding the master table to the host terminal, and enters a wait for the master table to be sent from the final information distribution terminal listed at the bottom of the information distribution ID field in the master table.

Then, during this wait, the encrypted information and the master table are successively transferred through the LAN from the host terminal to the individual information distribution terminals described in the respective rows of the information distribution ID field in the master table, so that the master table is overwritten in succession. Specifically, the guest terminal A having received encrypted information and a master table from the host terminal with its transmission/reception unit 23 stores the encrypted information into its external storage unit 22 for retention, writes the date and time of reception into the corresponding distribution date/time field in the master table, and transfers the overwritten master table and the encrypted information from the transmission/reception unit 23 to the guest terminal B. Subsequently, both the encrypted information and the overwritten master table are similarly transferred to the corresponding guest terminals in succession until a master table with the distribution date/time field listing the reception dates and times of all the information distribution terminals is transmitted from the final information distribution terminal to the host computer 1.

Parenthetically, while in this embodiment the encrypted information is not sent from the final information distribution terminal to the host computer 1, it may be transmitted to the host computer 1 so that the host computer 1 checks for information tampering.

Then, the control unit 11 of the host computer 1 receives the master table from the final information distribution terminal with its transmission/reception unit 13 at next step S6, and proceeds to step S7 to collate the retained master table from the host terminal with the master table from the final information distribution terminal for error check. If there is no error, the control unit 11 enters a wait for a browse request from the individual information distribution terminals. If any error exists, the control unit 11 proceeds to step S13 to inform the host terminal to this effect so as not to send a decryption key.

Here, the errors include the cases where the master table sent from the final information distribution terminal contains an information distribution terminal not included in the master table from the host terminal, and the cases where the distribution date/time field does not contain the reception dates and times of all the information distribution terminals. In these cases, there might be unauthorized leakage of information to third parties or information transfers not in the order determined by the host terminal, and hence a decryption key will not be sent.

At step S8, the control unit 11 of the host computer 1 enters a wait for the browse-request data from the information distribution terminals. On receiving the browse-request data with the transmission/reception unit 13, the control unit 11, at next step S9, confirms whether this information distribution terminal has browse authority or not by, e.g., making a collation with the master table from the host terminal. If the terminal has the authority, the control unit 11 proceeds to step S10. If the terminal has no authority, the control unit 11 proceeds to step S13 and controls the transmission/reception unit 13 to notify the host terminal to this effect.

At step S10, the control unit 11 of the host computer 1 sends a decryption key to that particular information distribution terminal, and proceeds to step S11. Accordingly, in the information distribution terminal having received the decryption key, the retained data is decrypted and displayed on the display unit 14 so that the information can be read.

Here, the decryption key for the host computer 1 to send differs from one information distribution terminal to another, and can be used by the destined information distribution terminal alone. Therefore, even if a decryption key and encrypted information are transferred to another terminal having no browse authority, that terminal cannot browse the information.

In each terminal, when a decryption key is received by the transmission/reception unit 23, the control unit 21 exercises control so as to read the encrypted information stored in the external storage unit 22, decrypt the encrypted information with the decryption key, and display the decrypted information on the display unit 24.

Here, for the sake of information confidentiality, the control unit 21 in each terminal simply displays the decrypted information on the display unit 24, exercising control to prevent the decrypted information from being retained into the external storage unit 22 or other storage means, transferred to another terminal by the transmission/reception unit 23, printed by a printer and the like, and so forth.

At step S11, the control unit 11 of the host computer 1 refers to the master table from the host terminal to check whether or not the information distribution terminals include any guest terminal having the information redistribution authority, and, if none, proceeds to step S12. On the other hand, when there is a guest terminal having the information redistribution authority, the control unit 11 returns to step S2 to execute the processing of steps S2 and the following steps, with the guest terminal having the information redistribution authority in place of the "host terminal" in the steps (step S2, step S7, step S13, etc.).

That is, the host computer 1 requests the guest terminal having the information redistribution authority to send a redistribution master table (step S2), and waits for the redistribution master table to be sent from that particular guest terminal (step S3). On receiving the redistribution master table from that guest terminal and retaining the same, the host computer 1 determines whether or not the individual distribution terminals (sub-guest terminals) described in the redistribution master table are authentic terminals (step S4).

Parenthetically, in the cases of redistribution, each guest terminal having the information redistribution authority has already retained the encrypted information to be transferred to its sub-guest terminals in the external storage unit 22; therefore, the above-described step S5 need not be executed. Subsequently, the host computer 1 enters a wait for the redistribution master table to be sent from the final information distribution terminal listed at the bottom of the information distribution ID field in the redistribution master table. In the meantime, the encrypted information and the redistribution master table are successively transferred through the LAN to the information distribution terminals (sub-guest terminals) described in the respective rows of the information distribution ID field in the redistribution master table, so that the redistribution master table is overwritten in succession. Here, the steps S6 and the following steps in the redistribution processing are the same as those described above, and description thereof will be omitted.

At step S12, the host computer 1 makes a determination whether or not the sending of encryption keys to all the information distribution terminals is completed. If the sending is not completed, the host computer 1 returns to step S8 and enters a wait for browse-request data from the information distribution terminals, repeating the processing of step S8 through step S11. Then, when the sending of decryption keys to all the information distribution terminals is completed, the host computer 1 notifies the host terminal to this effect at step 13, and ends the series of processing.

As described above, according to the embodiment of the information management system, the individual terminals on the LAN and the host computer 1 carry out master table transmission/reception therebetween so that the host computer 1 exercises the management of information transfers and the like . This prevents the information transferred within a local area network from being transferred to a terminal with no browse authority, and allows detection in cases of unauthorized transfers and the like, thereby ensuring information confidentiality.

### Industrial Applicability

Having the configuration as described above, the present invention allows the provision of an information management system which can block unauthorized third-party leakage and access of information transferred on a local area network to secure information confidentiality, with extreme industrial usefulness.

## Claims

1. An information management system comprising n terminals (n is an integer equal to or greater than 2), a local area network for connecting said n terminals to one another, and a host computer for sending/receiving data to/from said individual terminals on said local area network, **characterized in that**: when information sent from said host computer is transferred from a host terminal to a guest terminal or guest terminals with any of said n terminals on said local area network as said host terminal and with one or more of the other terminals as said guest terminal(s), said host terminal sends to said host computer information request data for specifying and requesting the information to transfer to said guest terminal(s), along with identification information on said guest terminal(s) to be the destination(s) of the information and information regarding a send sequence; and said host computer applies encryption to information corresponding to the information request data sent from said host terminal and sends encrypted data to said host terminal on said local area network, and, on receiving browse request data for requesting browsing of the information from any of said terminals on said local area network, performs authentication bases on said identification information and sends decryption data for decrypting the encrypted data to the terminal only if authenticated properly.

2. The information management system according to claim 1, **characterized in that** said host terminal sends to said host computer said information request data along with a master table describing the identification information on said guest terminal (s) to be the destination (s) of the information and the information regarding the send sequence, and, on receiving said encrypted data from said host computer, transfers said encrypted data to said guest terminal(s) in the send sequence described in said master table.

3. The information management system according to claim 2, **characterized in that** each terminal on said local area network having received said encrypted data and said master table from said host terminal records the date and time of reception of said encrypted data and said master table into said master table, and sends said recorded master table to said host computer in advance of requesting said decryption data from said host computer.

4. The information management system according to claim 2 or 3, **characterized in that** said host computer, on receiving said browse request data from each terminal on said local area network, records the date and time of reception of said browse request data into said master table.

5. The information management system according to claim 3, **characterized in that** said host computer temporarily retains said master table sent from said host terminal, and, when said recorded master table from each terminal is sent thereto, collates said retained master table with said recorded master table for appropriate update and retention.

6. The information management system according to claim 2, **characterized in that** said host terminal records into said master table information indicating whether or not each guest terminal to be the destination of the information has redistribution authority to make a further transfer of that information to another terminal, and sends said master table to said host computer.

7. The information management system according to claim 6, **characterized in that** : a guest terminal having the redistribution authority sends a redistribution master table to said host computer on receiving said encrypted data and said master table from said host terminal, said redistribution master table describing identification information on a sub-guest terminal or sub-guest terminals to be the destination (s) of said encrypted data and information regarding a send sequence; and said host computer, on receiving said browse request data from a sub-guest terminal described in said redistribution master table, performs authentication based on the identification information described in said redistribution master table and sends said decryption data to the sub-guest terminal only if authenticated properly.

8. The information management system according to claim 7, **characterized in that** said host computer, on receiving said browse request data from each terminal on said local area network, records the date and time of reception of said browse request data into said redistribution master table.

9. The information management system according to claim 7 or 8, **characterized in that** said host computer temporarily retains said redistribution master table, and, when said recorded redistribution master table from each terminal is sent thereto, collates said retained redistribution master table with said recorded redistribution master table for appropriate update and retention.
